# EUROPEAN PATENT APPLICATION

(11) **EP 3 360 749 A1**
(43) Date of publication of application: **15.08.2018**
(21) Application number: 16863818.7
(22) Date of filing: 28.10.2016
(51) Int. Cl.: B60W 40/09, B60W 40/107, G08G 1/16

(54) **DRIVING IMPROVEMENT DETECTION DEVICE AND DRIVING IMPROVEMENT DETECTION SYSTEM**

(30) Priority: 12.11.2015 JP 2015222467
(71) Applicant: Panasonic Intellectual Property Management Co., Ltd., Osaka-shi, Osaka 540-6207 (JP)
(72) Inventor: ITAHARA, Hiroshi, Osaka 540-6207 (JP)
(74) Representative: Eisenführ Speiser
(86) International application number: PCT/JP2016/004753
(87) International publication number: WO 2017/081851

(57) **Abstract**

A driving behavior detection device includes an acquisition unit for acquiring information indicating an acceleration of a vehicle, and a computing unit for generating driving behavior data indicating a driving behavior of a driver of the vehicle based on time series of behavior data indicating an acceleration of the vehicle and a jerk that is a change rate of the acceleration. The computing unit sets a determination plane with coordinate axes set for the acceleration and the jerk, sets, on the determination plane, a first area (R1) where the acceleration is not larger than a first predetermined value and the jerk is not larger than a second predetermined value, as an area indicating safe driving, and sets a second area (R2, R3) other than the first area, as an area indicating non-safe driving. The computing unit generates the driving behavior data based on the behavior data disposed in the first and second areas (R1-R3).

## Description

### Technical Field

The present disclosure relates to a driving behavior detection device and a driving behavior system that detect a driving behavior of a driver of a vehicle.

### Background

Patent Document 1 discloses a vehicle driving support device that determines a state of operation of driving a vehicle based on an amount of change in acceleration or the like.

The vehicle driving support device disclosed in Patent Document 1 includes amount-of-change calculation means that calculates a first related value related to an amount of change in acceleration of the vehicle, jerk calculation means that calculates a second related value related to jerk of the vehicle, acceleration calculation means that calculates a third related value related to an absolute value of acceleration of the vehicle, and state determination means that determines a state of operation of driving the vehicle based on the first to third related values.

When the first related value calculated by the amount-of-change calculation means is not smaller than a predetermined value, the state determination means determines the state of operation of driving a vehicle in accordance with a predetermined determination criterion by using a first determination map. The determination criterion is set based on a ratio of kinetic energy of a mass point when a change in acceleration of the vehicle ends to an amount of change in acceleration. The kinetic energy of the mass point is calculated using a vibration model representing the movement of the mass point in a vehicle interior based on the first and second related values. When the first related value is smaller than the predetermined value, the state determination means uses a second determination map different from the first determination map to determine the state of operation of driving the vehicle based on the first and third related values. With this configuration, it is possible to accurately determine the state of operation of driving the vehicle irrespective of the amount of change in acceleration.

### Prior Art Documents

### Patent Document

Patent Document 1: Japanese Unexamined Patent Application Publication No. 2012-198345

### Summary of Invention

### Problem to be Solved by the Invention

The present disclosure provides a driving behavior detection device and a driving behavior system capable of accurately detecting a driving behavior of a driver of a vehicle.

### Means for Solving the Problem

A driving behavior detection device of the present disclosure includes an acquisition unit configured to acquire information indicating an acceleration of a vehicle, and a computing unit configured to generate driving behavior data indicating a driving behavior of a driver of the vehicle based on time series of behavior data indicating an acceleration of the vehicle and a jerk that is a change rate of the acceleration. The computing unit sets a determination plane with coordinate axes set for the acceleration and the jerk, sets, on the determination plane, a first area in which the acceleration is equal to or smaller than a first predetermined value and the jerk is equal to or smaller than a second predetermined value, as an area indicating safe driving, and sets a second area other than the first area, as an area indicating non-safe driving. The computing unit generates the driving behavior data based on the behavior data disposed in the first and second areas.

A first driving behavior detection system of the present disclosure incudes the driving behavior detection device described above, a mobile terminal configured to receive the driving behavior data from the driving behavior detection device and transfer the driving behavior data to an external device, and a server configured to receive the driving behavior data from the mobile terminal and store the driving behavior data into a storage unit.

A second driving behavior detection system of the present disclosure includes the driving behavior detection device described above, and a server configured to receive the driving behavior data from the driving behavior detection device and store the driving behavior data into a storage means.

### Effects of the Invention

According to the driving behavior detection device and the driving behavior system of the present disclosure, the driving behavior of the driver is detected based on the area of the determination plane with coordinate axes set for the acceleration and the jerk, so that the driving behavior of the driver of the vehicle can be detected accurately.

### Brief Description of Drawings

FIG. 1 is a diagram showing a configuration of a driving behavior detection system in a first embodiment of the present disclosure.
FIG. 2 is a block diagram showing a configuration of a telemeter unit in the first embodiment.
FIG. 3 is a block diagram showing a configuration of a mobile terminal in the first embodiment.
FIG. 4 is a block diagram showing a configuration of a data server in the first embodiment.
FIG. 5 is a diagram for describing a transition of driving behavior data in the first embodiment.
FIG. 6 is a graph illustrating a change in vehicle speed when sudden braking is applied while a vehicle is descending a slope.
FIG. 7 is a graph illustrating a change in acceleration when sudden braking is applied while the vehicle is descending a slope.
FIG. 8 is a graph for describing a J (jerk) - G (acceleration) plane.
FIG. 9 is a graph illustrating a two-dimensional threshold for driving behavior determination, set on the J (jerk) - G (acceleration) plane.
FIG. 10 is a flowchart showing a generation process for driving behavior data.
FIG. 11 is a diagram for describing significance of driving behavior data obtained by a driving behavior detection system of the present disclosure.
FIG. 12 is a diagram showing a configuration of a driving behavior detection system in a second embodiment of the present disclosure.
FIG. 13 is a diagram for describing a transition of driving behavior data in the second embodiment.
FIG. 14 is a diagram showing a configuration of a driving behavior detection system in a third embodiment of the present disclosure.
FIG. 15 is a diagram for describing a transition of driving behavior data in the third embodiment.

### Mode for Carrying Out the Invention

Some embodiments are described in detail below with reference to the drawings as appropriate. However, description explained in detail more than necessary may be omitted. For example, detailed description of already well-known matters and redundant description on substantially the same configuration may be omitted. This is to avoid the unnecessary redundancy of the following description and to facilitate understanding by those skilled in the art.

In addition, the inventor(s) provide(s) the accompanying drawings and the following description in order to enable those skilled in the art to sufficiently understand the present disclosure, which is not intended to limit the claimed subject matter.

### First Embodiment

### 1-1. Configuration

### 1-1-1. System Configuration

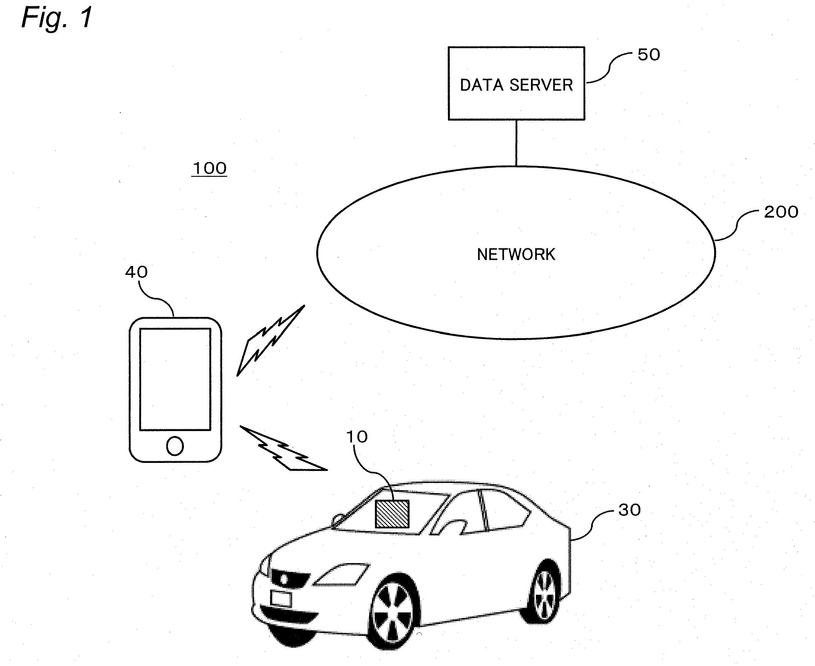

Hereinafter, an embodiment of a driving behavior detection system according to the present invention is described with reference to the accompanying drawings. The driving behavior detection system described in the following embodiment is a system for detecting a driving behavior of a driver for a vehicle. FIG. 1 shows the configuration of the driving behavior detection system according to an embodiment of the present disclosure.

As shown in FIG. 1, a driving behavior detection system 100 includes a telemeter unit 10, a mobile terminal 40, and a data server 50. The telemeter unit 10 is disposed in a vehicle 30, detects a behavior of the vehicle 30 while the vehicle 30 is driven, obtains data indicating the driving behavior (or driving operation state) of the driver for the vehicle (hereinafter referred to as "driving behavior data") based on the detected behavior, and transmits the obtained data to the outside. The mobile terminal 40 receives the driving behavior data from the telemeter unit 10 and transmits the received data to the data server 50 via a network 200. The data server 50 updates the database based on the received driving behavior data.

Specific configurations of elements of the telemeter unit 10, mobile terminal 40 and data server 50 are described below.

### 1-1-2. Telemeter Unit

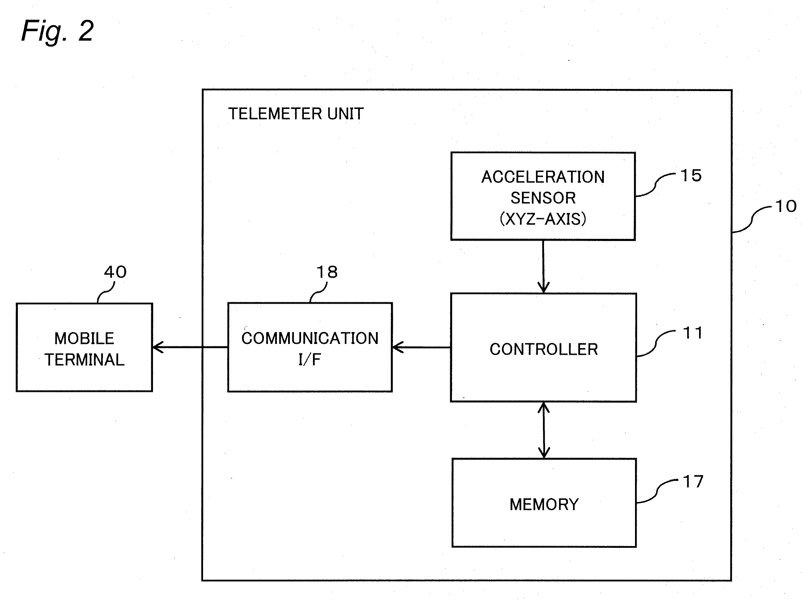

FIG. 2 is a diagram illustrating the configuration of the telemeter unit 10. The telemeter unit 10 includes a controller 11, an acceleration sensor 15, a communication interface 18 that enables wireless communication with other electronic devices in accordance with a communication standard such as WiFi or Bluetooth (registered trademark), and a memory 17 that stores data and the like.

The controller 11 is realized by a CPU or an MPU, and executes a program stored in a memory 17 to achieve a predetermined function described later. The program to be executed by the controller 11 may be provided via the network 200 or a recording medium such as a CD-ROM.

The acceleration sensor 15 is a sensor that detects accelerations of the vehicle 30 in three orthogonal directions (X, Y, Z directions). It is assumed here that the width direction of the vehicle 30 is the X direction, the traveling direction (forward direction) of the vehicle 30 is the Y direction, and the upward direction (zenith direction) of the vehicle 30 is the Z direction.

The memory 17 is a recording medium for storing various pieces of data and is realized by, for example, a semiconductor memory element such as a flash memory. The memory 17 stores data and programs executed by the controller 11. Instead of the memory 17, a recording medium such as a detachable memory card or a hard disk may be used.

The communication interface 18 is a module that performs wireless communication in accordance with the communication standard such as Wi-Fi or Bluetooth. The communication interface 18 may perform communication in accordance with a communication standard such as LTE or 3G. Note that the communication interface 18 is not limited to wireless communication but may be one that performs wired communication.

### 1-1-3. Mobile Terminal

The mobile terminal 40 can communicate with the telemeter unit 10. Further, the mobile terminal 40 can transmit information to the data server 50 via the network 200. In the present embodiment, a smartphone is assumed as an example of the mobile terminal 40, but the mobile terminal 40 may be a PDA, a mobile phone, or the like.

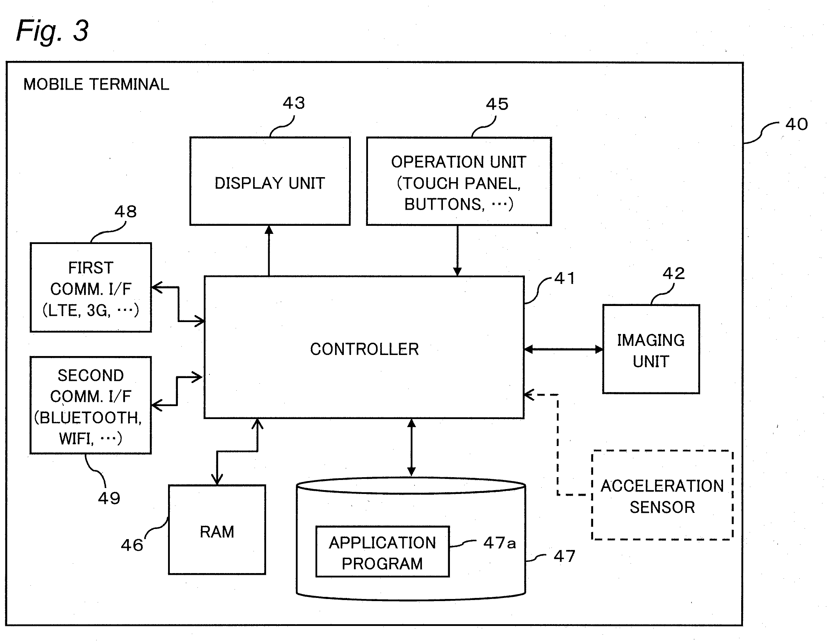

FIG. 3 is a diagram illustrating the configuration of the mobile terminal 40. The mobile terminal 40 includes an imaging unit 42 for capturing images, a display unit 43 for displaying information such as images, and an operation unit 45. Further, the mobile terminal 40 includes a first communication interface 48 for communication with a network and a second communication interface 49 for communication with another electronic device. Moreover, the mobile terminal 40 includes a RAM 46 and a data storage unit 47 for storing data and the like, and a controller 41 for controlling the overall operation of the mobile terminal 40. The mobile terminal 40 may include an acceleration sensor as described later.

The imaging unit 42 includes an image sensor such as a CCD or a CMOS image sensor, and captures an image of the subject to generate image data.

The display unit 43 is realized by, for example, a liquid crystal display or an organic EL display. The operation unit 45 includes a touch panel disposed on the upper surface of the display unit 43 and configured to accept a touch operation by a user. The operation unit 45 further includes operation buttons. The operation buttons include buttons physically provided in the main body of the mobile terminal 40 and virtual buttons realized by the display unit 43 and the touch panel function.

The first communication interface 48 is a communication module for connecting to the network and performs communication in accordance with the communication standard such as LTE or 3G. The second communication interface 49 is a communication module for wirelessly communicating with another electronic device at a relatively short distance and performs communication in accordance with the communication standard such as Wi-Fi or Bluetooth. The second communication interface 49 may be one which communicates with another electronic device via a cable, and for example, the second communication interface 49 may perform data communication in accordance with a standard such as USB (Universal Serial Bus) or HDMI (High Definition Multimedia Interface) (registered trademark)).

The RAM 46 is a storage device that temporarily stores programs and data, and functions as a working area for the controller 41. The data storage unit 47 is a recording medium for storing programs and various pieces of data, and can be realized by a recording medium such as a hard disk, a semiconductor memory, or a detachable memory card. A program (OS, application program 47a) to be executed by the controller 41 and data are stored in the data storage unit 47.

The controller 41 is realized by a CPU or an MPU, and executes an application program 47a stored in the data storage unit 47, thereby implementing a predetermined function described later. The application program 47a may be provided via the network 200 or may be provided by a recording medium such as a CD-ROM.

### 1-1-4. Data Server

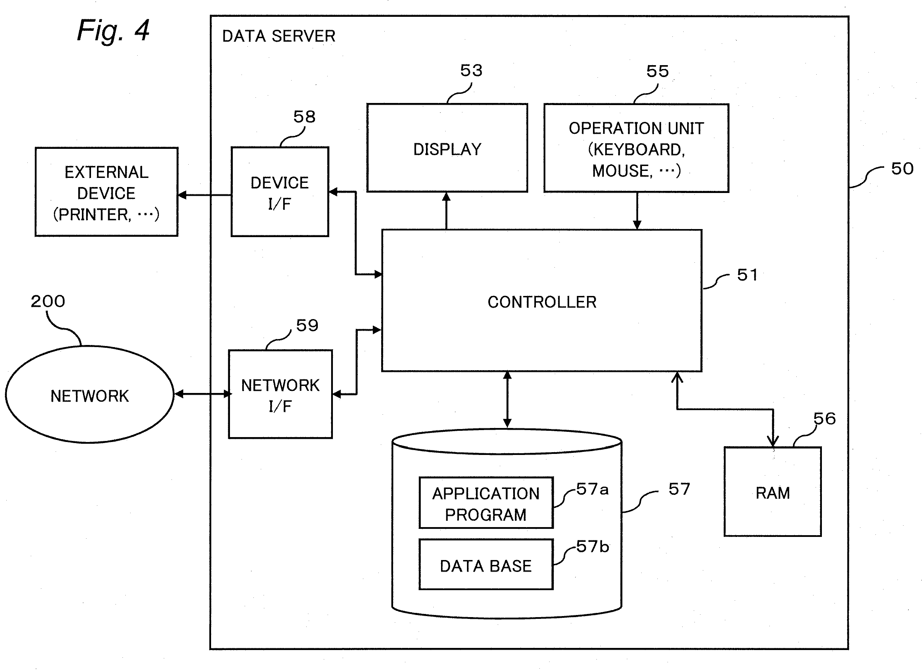

FIG. 4 is a diagram illustrating the configuration of the data server 50. The data server 50 is realized by an information processing device such as a personal computer. The data server 50 includes a controller 51 for controlling the overall operation, a display unit 53 for displaying a screen, an operation unit 55 for the user to operate, and a RAM 56 and a data storage unit 57 for storing data and programs. The display unit 53 is realized by, for example, a liquid crystal display or an organic EL display. The operation unit 55 is realized by a keyboard, a mouse, a touch panel, and the like.

The data server 50 further includes a device interface 58 for connecting to an external device such as a printer and a network interface 59 for connecting to a network. The device interface 58 is a communication module for performing data communication in accordance with USB, HDMI, IEEE 1394, or the like. The network interface 59 is a communication module that performs data communication in accordance with a standard such as IEEE 802.11 or Wi-Fi.

The controller 51 includes a CPU or an MPU, and implements a predetermined function by executing a predetermined control program 57a stored in the data storage unit 57. The control program executed by the controller 51 may be provided via the network 200 or a recording medium such as a CD-ROM.

The RAM 56 is a storage device for temporarily storing programs and data and functions as a work area of the controller 51. The data storage unit 57 is a recording medium that stores parameters, data, and programs necessary for implementing functions, and stores control programs executed by the controller 51 and various pieces of data. The data storage unit 51 is realized by, for example, a hard disk (HDD) or a semiconductor storage device (SSD). In the data storage unit 57, the control program 57a is installed for implementing functions described later. By executing this control program 57a, the controller 51 implements various functions described later. The data storage unit 57 also stores a database 57b relating to the driving behavior of the driver. The data storage unit 57 also functions as a working area of the controller 51.

The database 57b manages data on the driving behavior in the vehicle in the following format, for example. Here, it manages a vehicle ID for identifying the vehicle, information indicating a measurement period (start date and end date) for the driving behavior, a safe driving rate, a dangerous driving rate, and a most dangerous driving rate. The safe driving rate indicates a ratio (percentage) of a period in which the driving is determined as safe driving in a measured driving period. The dangerous driving rate indicates a ratio (percentage) of a period in which the driving is determined as dangerous driving in the measured driving period. The most dangerous driving rate indicates a ratio (percentage) of a period in which the driving is determined as most dangerous driving in the measured driving period. Note that the data on the driving behavior managed in the database 57b is not limited to the following data.

**[Table 1]**

| | | | | |
|---|---|---|---|---|
| Vehicle ID | Measurement period (Start date, end date) | Safe driving rate (%) | Dangerous driving rate (%) | Most dangerous driving rate (%) |

### 1-2. Operation

The operation of the driving behavior detection system 100 configured as described above is described below.

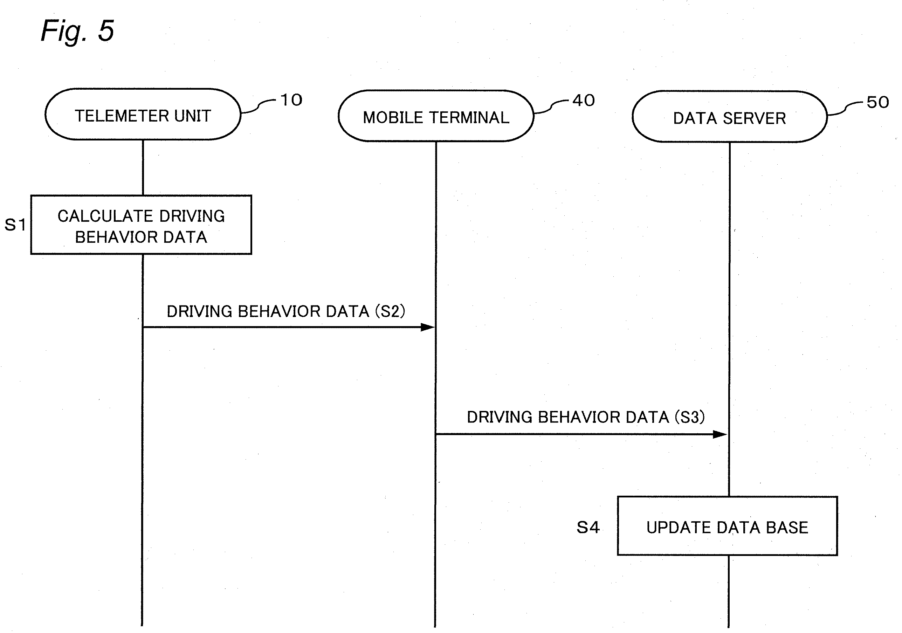

FIG. 5 is a diagram for describing a transition of driving behavior data in the driving behavior detection system 100. In the driving behavior detection system, the telemeter unit 10 calculates driving behavior data indicating the driving behavior of the driver based on the behavior data of the vehicle 30 (S1) and transmits the calculated data to the mobile terminal 40 via the communication interface 18 (S2). Details of the operation of calculating the driving behavior data are described later. The mobile terminal 40 receives the driving behavior data from the telemeter unit 10 via the second communication interface 49 (S2), and transmits the received driving behavior data to the data server 50 via the first communication interface 48 (S3). The data server 50 receives the driving behavior data from the mobile terminal 40 (S3) and updates the database 57b based on the received driving behavior data (S4). As described above, the driving behavior data detected by the telemeter unit 10 is transmitted to the data server 50, and the database 57b is updated with the driving behavior data. By referring to the database 57b, it is possible to recognize the vehicle driving behavior of the driver.

### 1-2-1. Driving Behavior Detection Operation

A driving behavior detection operation of the driving behavior detection system is described.

It is generally known that there is a correlation between the acceleration during driving of the vehicle and the driving situation. For example, in normal town driving, a gentle acceleration in a car is at most about 0.15 G. When the acceleration exceeds 0.3 G, it can be determined as "rough driving".

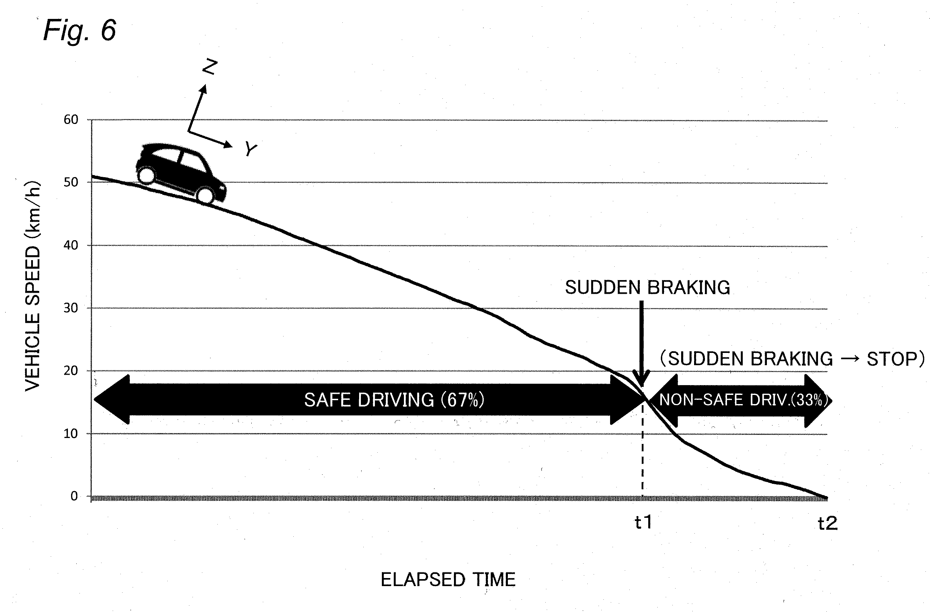

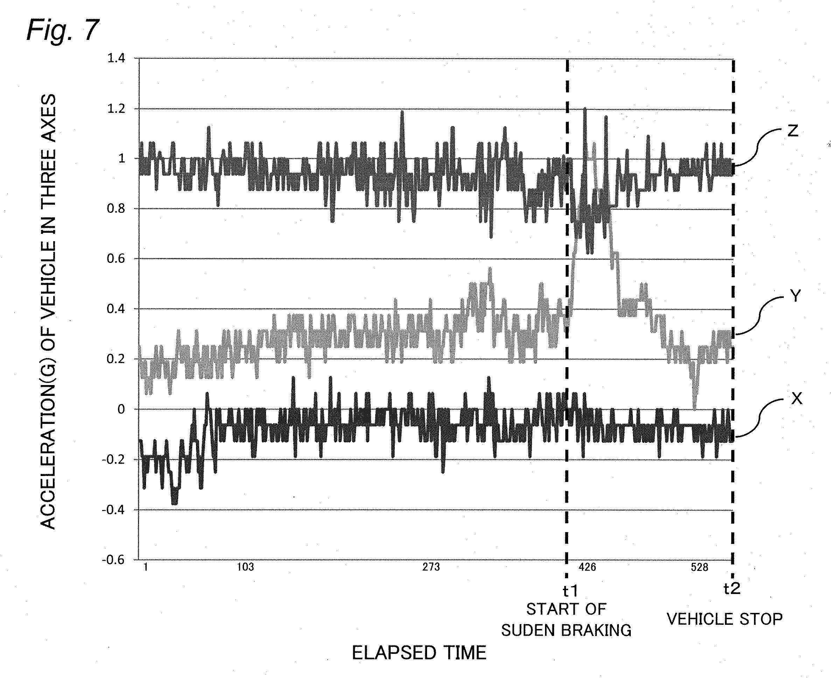

FIG. 6 is a graph illustrating a change in vehicle speed measured when sudden braking is applied while the vehicle is descending a gentle slope. In this example, a minivan (with two people riding) descending a gentle slope is driven such that normal deceleration is performed from a speed of about 50 km/h, and when the speed reaches 20 km/h, sudden braking is applied for sharp deceleration to 0 km/h. For such driving of the vehicle, a change in acceleration of the vehicle was measured by an acceleration sensor (see FIG. 7 described later). The measurement was carried out for about 11 seconds at a sampling interval of 20 ms.

In FIG. 6, the driving until sudden braking started when the speed of 20 km/h is reached (until time t1) is "safe driving", while the driving until the vehicle is stopped after the sudden braking (from time t1 to t2) is "most dangerous driving."

FIG. 7 is a graph illustrating a change in acceleration measured by the acceleration sensor with respect to the behavior of the vehicle as shown in FIG. 6. A plot X represents an acceleration in the X direction (the width direction of the vehicle), a plot Y represents an acceleration in the Y direction (the traveling (the forward and rearward) direction of the vehicle), and a plot Z represents an acceleration in the Z direction (the upward direction of the vehicle). As shown in FIG. 7, when sudden braking is started at time t1, the acceleration in the Y direction (traveling direction) changes greatly. At this time, the vehicle gently descends the slope, and thus an offset of 0.3 always occurs in the acceleration in the Y direction. The magnitude of this offset varies depending on the inclination angle of the slope and the weight of the vehicle. As described above, since the offset occurs in the acceleration, it is difficult to accurately determine whether the state is the "safe driving state" or the "most dangerous driving state" only based on the acceleration.

Therefore, as a result of earnest research, the inventor has found that the driving behavior (i.e., the driving state) can be accurately detected by determining the driving behavior considering of the jerk in addition to the acceleration. Note that the jerk is an amount that indicates the rate of change in acceleration, obtained by differentiation of the acceleration.

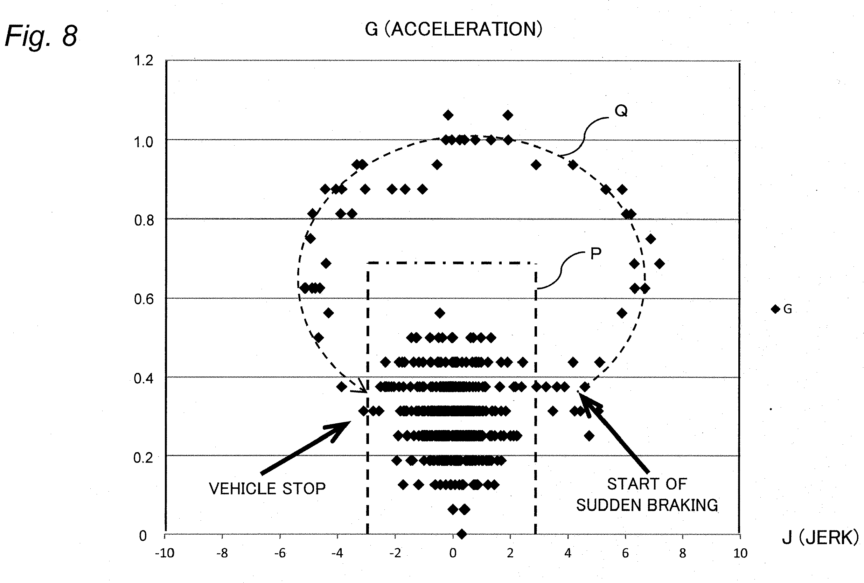

FIG. 8 is a graph plotting changes in acceleration and jerk measured in the Y-axis direction (traveling direction) with respect to the sampling points measured for the behavior of the vehicle shown in FIG. 6, on a two-dimensional plane (hereinafter referred to as "J-G plane") In the J-G plane shown in FIG. 8, a horizontal axis represents a jerk (J) and a vertical axis represents an acceleration (G).

The inventor has discovered that plots of the sampling points draw a unique locus on such a J-G plane due to a sudden change of the vehicle behavior. Specifically, in a situation where safe driving is being performed as shown in FIGS. 6 and 7, plots concentrate in a range p (an area indicated by a dashed line) where the jerk (J) and the acceleration (G) are relatively small on the J-G plane as shown in FIG. 8. Thereafter, when sudden braking is applied and the vehicle enters the most dangerous driving situation, a locus Q of the plots is drawn in the counterclockwise direction, greatly exceeding the range P on the J-G plane.

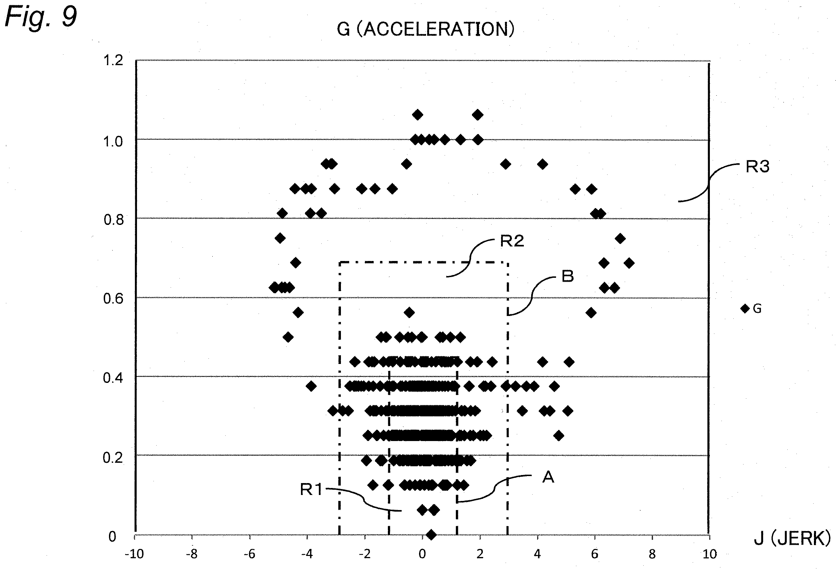

The inventor has found that the driving situation can be accurately grasped by considering such a locus Q of the plots on the J-G plane. Specifically, first, as shown in FIG. 9, thresholds, that is, determination areas R1 to R3 are two-dimensionally set on the J-G plane. Then, the driving behavior data is calculated based on the number of plots included in the determination areas R1 to R3 set on the J-G plane. In the example of FIG. 9, an area R1 (an area indicated by a broken line A) where the acceleration is not larger than a first threshold (0.45) and the absolute value of the jerk is not larger than a second threshold (1.0) is set, as the determination area. Further, there is set an area R2 (an area indicated by a dashed line B) which is an area outside the area R1 and in which the acceleration is not larger than a third threshold (0.7 > first threshold) and the absolute value of the jerk is not larger than a fourth threshold (3.0 > second threshold) . Moreover, an area R3 is set outside the area R2.

The area R1 set as described above is an area where both the acceleration (G) and the jerk (J) are relatively small and is an area in which the driving is determined as "safe driving". The area R3 is an area where both the acceleration (G) and the jerk (J) are relatively large, and is an area in which the driving is determined as "most dangerous driving". The area R2 is an intermediate area between the area R1 and the area R3, and is an area in which the driving is determined as "dangerous driving".

In calculating the driving behavior data of the present embodiment, the number of plots included in each of areas R1 to R3 is counted, and a ratio (percentage) of the count in each of areas R1 to R3 to a total number of plots is calculated. That is, as driving behavior data, the percentages of the periods of "safe driving", "dangerous driving", and "most dangerous driving" with respect to the whole operation period are calculated based on the counts of plots for areas R1, R2 and R3.

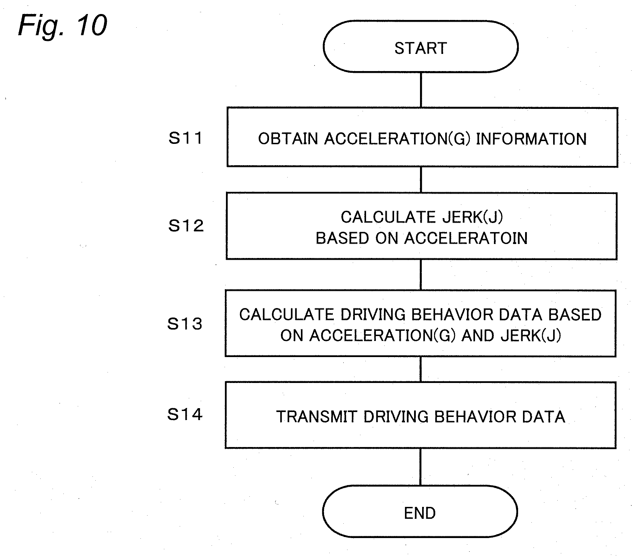

FIG. 10 is a flowchart showing a generation process for the driving behavior data. With reference to FIG. 10, the generation process for the driving behavior data in the telemeter unit 10 is described below. The process shown in FIG. 10 is mainly executed by the controller 11 of the telemeter unit 10.

During the vehicle driving, the acceleration (G) of the vehicle 30 is detected (measured) at a predetermined sampling interval (e.g., 20 msec) by the acceleration sensor 15 in the telemeter unit 10, and information indicating the detected (measured) acceleration is accumulated in the memory 17.

When the process shown in FIG. 10 is started, the controller 11 of the telemeter unit 10 reads from the memory 17 the information of the acceleration (G) measured and stored in a predetermined period (e.g., one month) (S11).

The controller 11 calculates the jerk (J) at the sampling point based on each read acceleration (G) in the Y direction (S12). Information on the acceleration and jerk at each sampling point is handled as "vehicle behavior data".

Next, the controller 11 calculates the driving behavior data based on the behavior data indicating the jerk (J) and the acceleration (G) for each sampling point (S13). A method for calculating the driving behavior data will be detailed below.

First, the controller 11 plots each piece of behavior data (information indicating the jerk and acceleration at each sampling point) on the J-G plane as shown in FIG. 9. The controller 11 counts the number of pieces of behavior data included in each of areas R1 to R3 on the J-G plane. The controller 11 then calculates, as the driving behavior data, a ratio (percentage) of the count in each of areas R1 to R3 to a total number of pieces of behavior data (sampling points). Then, the safe driving rate is obtained based on the ratio (percentage) of the count for area R1 to the total count. The dangerous driving rate is obtained based on the ratio (percentage) of the count for the area R2 to the total count. The most dangerous driving rate is obtained based on the ratio (percentage) of the count for the area R3 to the total count. Instead of the ratio (percentage) of the count, the count for each of areas R1 to R3 may be used as the driving behavior data.

Thereafter, the controller 11 of the telemeter unit 10 transmits the obtained driving behavior data to the mobile terminal 40 via the communication interface 18 (S14).

The mobile terminal 40 receives the driving behavior data from the telemeter unit 10 via the second communication interface 49 and transmits the received driving behavior data to the data server 50 connected to the network 200 via the first communication interface 48. The data server 50 receives the driving behavior data via the network interface 59 and updates the database 57b based on the received data (see FIG. 5).

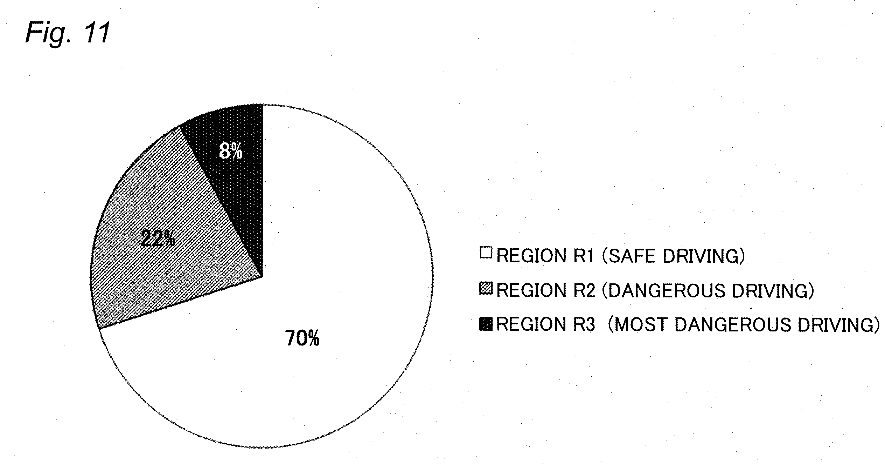

FIG. 11 is a diagram for describing the significance of the driving behavior data obtained by the driving behavior detection system 100 of the present embodiment. This figure shows the driving behavior data obtained by the driving behavior detection system 100 for the behavior of the vehicle when sudden braking is applied while the vehicle is descending a gentle slope as shown in FIGS. 6 and 7.

The driving behavior data shown in the figure indicates that a ratio of safe driving (a ratio of the number of plots in the area R1 on the J-G plane) is 70%, a ratio of dangerous driving (a ratio of the number of plots in the area R2 on the J-G plane) is 22%, and a ratio of most dangerous driving (a ratio of the number of plots in the area R3 on the J-G plane) is 8%. For the examples of the driving shown in FIGS. 6 and 7, the driving before occurrence of sudden braking is considered as safe driving, and the driving after occurrence of sudden braking is considered as most dangerous driving (including dangerous driving). In the examples of FIGS. 6 and 7, the ratio of the period from the occurrence of sudden braking to the stop of the vehicle, namely the period of most dangerous driving (including dangerous driving) to the entire measurement period is 33%, and the ratio of the period of safe driving to the entire measurement period is 67%. As shown in FIG. 11, for the driving behavior data obtained by the driving behavior detection system 100 of the present embodiment, the ratio of most dangerous driving (including dangerous driving) is 30% (= 22% + 8%), and it is found therefrom that a detection result close to an actual measurement value (33%) has been obtained.

### 1-3. Effects, etc.

As described above, the telemeter unit 10 (an example of the driving behavior detection device) according to the present embodiment includes: the acceleration sensor 15 (an example of an acquisition unit) that acquires a time series of an acceleration of a vehicle; and the controller 11 that generates driving behavior data indicating a driving behavior of a driver of the vehicle based on a time series of behavior data indicating an acceleration (G) of the vehicle and a jerk (J) that is a change rate of the acceleration. The controller 11 sets a J-G plane (an example of a determination plane) with coordinate axes for the acceleration and the jerk. The controller 11 sets, as an area indicating safe driving on the J-G plane, the area R1 (an example of a first area) in which the acceleration is equal to or smaller than a first predetermined value and the jerk is equal to or smaller than a second predetermined value. The controller 11 sets the areas R2 and R3 (an example of a second area) other than the area R1, as an area indicating non-safe driving. The controller 11 generates driving behavior data based on the behavior data disposed in areas R1, R2, and R3.

As described above, the telemeter unit 10 of the present embodiment detects the driving behavior of the driver based on the area of the determination plane with coordinate axes for the acceleration and the jerk. That is, consideration of the jerk in addition to the acceleration enables more accurate detection of the driving behavior without affection of the offset of the acceleration which is generated depending on the weight of the vehicle or the like.

### Second Embodiment

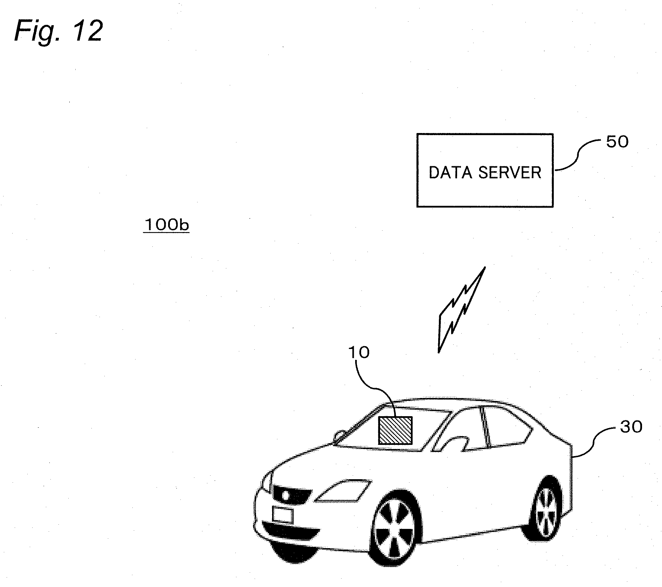

FIG. 12 is a diagram showing the configuration of a driving behavior detection system 100b in a second embodiment of the present disclosure. In the first embodiment, the driving behavior detection system 100 is composed of the telemeter unit 10, the mobile terminal 40, and the data server 50. In contrast, the driving behavior detection system 100b of the present embodiment is composed of a telemeter unit 10 mounted on the vehicle and a data server 50. That is, the telemeter unit 10 transmits data directly to the data server 50 not through the mobile terminal 40. Note that the telemeter unit 10 can be connected to the network 200 via the communication interface 18 so as to communicate with the data server 50.

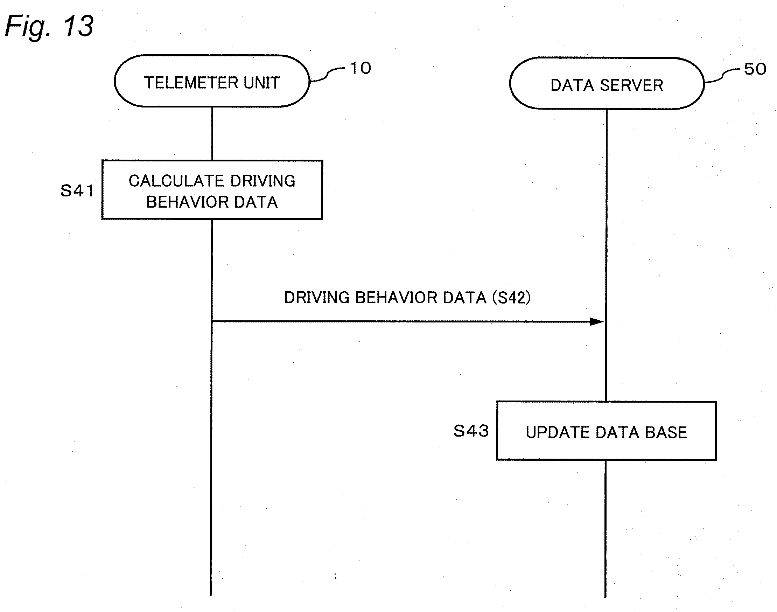

FIG. 13 is a diagram for describing the transition of driving behavior data in the second embodiment. As shown in the figure, the telemeter unit 10 calculates driving behavior data (S41) and transmits the calculated driving behavior data to the data server 50 (S42). The data server 50 updates the database 57b based on the received data (S43).

The telemeter unit 10 may transmit the driving behavior data to the data server 50 every predetermined interval (e.g., one month). Alternatively, the telemeter unit 10 may transmit data when instructed by the user, or when a predetermined operation (such as engine start) of the vehicle is performed.

### Third Embodiment

In the present embodiment, a configuration in which the mobile terminal 40 has the aforementioned functions of the telemeter unit 10 is described. That is, in the first embodiment, although the telemeter unit 10 detects the acceleration of the vehicle 30 and calculates the driving behavior data, the mobile terminal 40 may execute these functions of the telemeter unit 10.

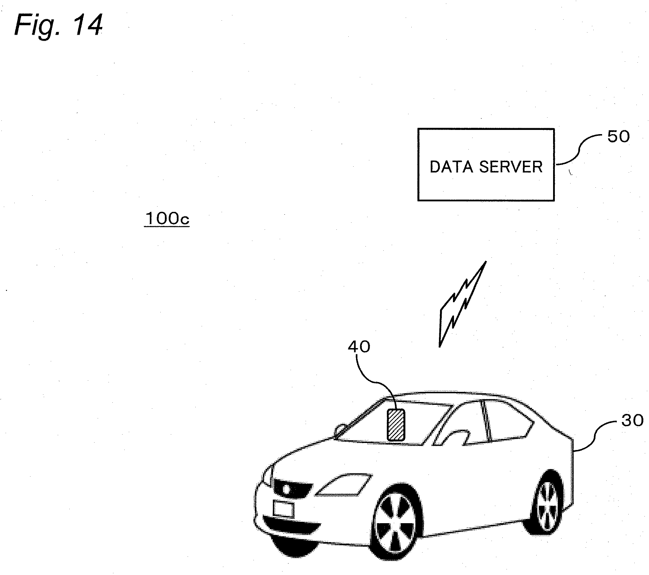

FIG. 14 is a diagram showing a configuration of a driving behavior detection system 100c in a third embodiment of the present disclosure. The driving behavior detection system 100c of the present embodiment is composed of a mobile terminal 40 and a data server 50. The mobile terminal 40 of the present embodiment is provided with an acceleration sensor capable of detecting accelerations in three orthogonal directions (XYZ directions). The mobile terminal 40 is disposed in the vehicle 30 with the traveling direction (forward direction) of the vehicle 30 equal to the Y direction and the upward direction of the vehicle equal to the Z direction. The mobile terminal 40 disposed in the vehicle 30 as thus described periodically measures and records the acceleration of the vehicle 30 while the vehicle 30 is driving.

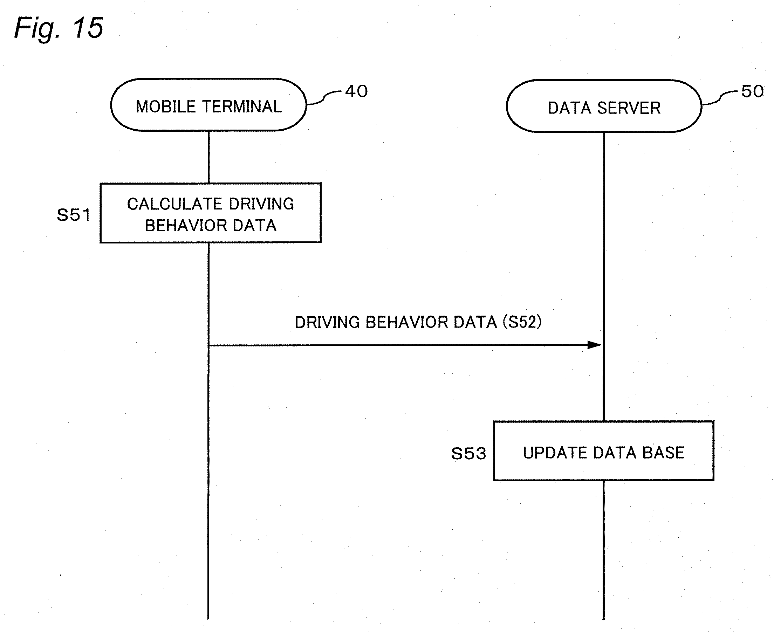

FIG. 15 is a diagram for describing a transition of driving behavior data in the third embodiment. As shown in the figure, the mobile terminal 40 calculates driving behavior data based on the measured acceleration data in accordance with the method described above (S51) and transmits the calculated driving behavior data to the data server 50 (S52). The data server 50 updates the database 57b based on the received driving behavior data (S53).

The mobile terminal 40 may transmit the driving behavior data to the data server 50 every predetermined period (e.g., one month), or may transmit data when predetermined operation (transmission instruction, etc.) is made by the user.

### Other Embodiments

As described above, the first to third embodiments have been described as examples of the technique disclosed in the present application. However, the technique in the present disclosure is not limited to this, and can also be applied to embodiments in which changes, substitutions, additions, omissions, or the like are made appropriately. Further, it is also possible to combine the respective constituent elements described in the first to third embodiments to form a new embodiment. Therefore, another embodiment is exemplified below.

In the first to third embodiments, the telemeter unit 10 has been described as an example of the driving behavior detection device. The driving behavior detection device is not limited to the telemeter unit 10. The mobile terminal 40 or the data server 50 can also be configured as the driving behavior detection device.

For example, in the first embodiment, as shown in FIG. 5, the driving behavior data is calculated in the telemeter unit 10. However, the driving behavior data may be calculated in a device other than the telemeter unit 10, such as the mobile terminal 40 or the data server 50.

More specifically, when the driving behavior data is calculated in the mobile terminal 40, the telemeter unit 10 transmits time series of the data of the detected acceleration to the mobile terminal 40. The mobile terminal 40 receives time series of the acceleration data via the second communication interface 49 (an example of the acquisition unit) and stores the received time series of the acceleration data into the data storage unit 47 for work. The mobile terminal 40 calculates a jerk (J) based on the received acceleration data, calculates driving behavior data based on the behavior data indicating the acceleration (G) and the jerk (J) (see steps S12 and S13 in FIG. 10), and transmits the calculated data to the data server 50. With such a configuration, the mobile terminal 40 can operate as the driving behavior detection device. In this case, the jerk data may be calculated by the telemeter unit 10, and the mobile terminal 40 may acquire information indicating the acceleration and the jerk from the telemeter unit 10.

Further, when the driving behavior data is calculated in the data server 50, the telemeter unit 10 transmits the acceleration data to the mobile terminal 40. The mobile terminal 40 transfers the received acceleration data to the data server 50. The data server 50 receives time series of the acceleration data via the network interface 59 (an example of the acquisition unit) and stores the received time series of the acceleration data into the data storage unit 57 for work. The data server 50 calculates the jerk (J) based on the received acceleration data, calculates the driving behavior data based on the behavior data indicating the acceleration and the jerk (see steps S12 and S13 in FIG. 10), and updates the database 57b with the calculated driving behavior data. With such a configuration, the data server 50 can operate as a driving behavior detection device. In this case, the jerk data may be calculated by the telemeter unit 10 or the mobile terminal 40, and the data server 50 may acquire information indicating the acceleration and the jerk from the telemeter unit 10 or the mobile terminal 40.

Further, in the second and third embodiments, the driving behavior data may be calculated in the data server 50. In this case, the data server 50 receives time series of the acceleration data from the telemeter unit 10 or the mobile terminal 40 via the network interface 59 (an example of the acquisition unit). The time series of the received acceleration data is stored in the data storage unit 57 for work. The data server 50 calculates the jerk (J) based on the received acceleration data and calculates the driving behavior data based on the behavior data indicating the acceleration and the jerk (see steps S12, S13 in FIG. 10). With such a configuration, the data server 50 can operate as the driving behavior detection device also in the second and third embodiments. In this case, the jerk data may be calculated by the telemeter unit 10 or the mobile terminal 40, and the data server 50 may acquire information indicating the acceleration and the jerk from the telemeter unit 10 or the mobile terminal 40.

The above embodiments describe the examples in which the controllers 11, 41, and 51 include the CPU or the MPU and implement prescribed functions as described later, by executing predetermined programs (softwares). As thus described, the functions of the controllers 11, 41, and 51 may be implemented by cooperative operation of hardware and software, or may be implemented only by a hardware circuit. For example, the controllers 11, 41, and 51 can be implemented by a CPU, an MPU, a DSP, an FPGA, an ASIC, an ASSP, or the like.

As described above, each of the embodiments has been described as illustration of the technique in the present disclosure. To that end, the accompanying drawings and detailed description have been provided.

Accordingly, some of the constituent elements described in the accompanying drawings and the detailed description can include not only constituent elements essential for solving the problem, but also constituent elements not being essential for solving the problem but provided for illustrating the above technique. For this reason, these nonessential constituent elements should not be recognized as essential as soon as these nonessential constituent elements are described in the accompanying drawings and detailed description.

Further, since the above embodiments have been provided for illustrating the technique in the present disclosure, it is possible to make various changes, substitutions, additions, omissions, or the like within the scope of claims or the equivalent thereof.

### Industrial Applicability

The present disclosure can be applied to a device for detecting a driving behavior of a driver of a vehicle.

## Claims

1. A driving behavior detection device comprising:
an acquisition unit configured to acquire information indicating an acceleration of a vehicle; and
a computing unit configured to generate driving behavior data indicating a driving behavior of a driver of the vehicle based on time series of behavior data indicating an acceleration of the vehicle and a jerk that is a change rate of the acceleration, wherein
the computing unit
sets a determination plane with coordinate axes set for the acceleration and the jerk,
sets, on the determination plane, a first area in which the acceleration is equal to or smaller than a first predetermined value and the jerk is equal to or smaller than a second predetermined value, as an area indicating safe driving, and sets a second area other than the first area, as an area indicating non-safe driving, and
generates the driving behavior data based on the behavior data disposed in the first and second areas.

2. The driving behavior detection device according to claim 1, wherein the computing unit plots each piece of behavior data on the determination plane and generates the driving behavior data based on the number of pieces of behavior data included in each of the first and second areas.

3. The driving behavior detection device according to claim 1, wherein
the acquisition unit is an acceleration sensor configured to measure an acceleration of the vehicle, and
the computing unit calculates a jerk based on the information indicating the acceleration measured by the acceleration sensor to generate the behavior data.

4. The driving behavior detection device according to claim 1, wherein
the acquisition unit is a communication interface configured to acquire information indicating the acceleration from an external device, and
the computing unit calculates a jerk based on the information indicating the acceleration acquired from the external device to generate the behavior data.

5. The driving behavior detection device according to claim 1, further comprising a communication unit configured to transmit the driving behavior data to outside.

6. A driving behavior detection system comprising:
the driving behavior detection device according to any one of claims 1 to 5;
a mobile terminal configured to receive the driving behavior data from the driving behavior detection device and transfer the driving behavior data to an external device; and
a server configured to receive the driving behavior data from the mobile terminal and store the driving behavior data into a storage unit.

7. A driving behavior detection system comprising:
the driving behavior detection device according to any one of claims 1 to 5; and
a server configured to receive the driving behavior data from the driving behavior detection device and store the driving behavior data into a storage means.
